# EUROPEAN PATENT SPECIFICATION

(11) **EP 3 800 448 B1**
(45) Date of publication and mention of the grant of the patent: **20.12.2023**
(21) Application number: 19201167.4
(22) Date of filing: 02.10.2019
(51) Int. Cl.: G01F 1/66

(54) **ULTRASONIC FLOW METER**
ULTRASCHALLFLUSSMESSER
DÉBITMÈTRE ULTRASONIQUE

(43) Date of publication of application: 07.04.2021
(73) Proprietor: HUBA CONTROL AG, 5436 Würenlos (CH)
(72) Inventor: Menzi, Stefan, 8038 Zürich (CH)
(74) Representative: Schaad, Balass, Menzl & Partner AG

(56) References cited:
- EP-A1- 3 199 923
- WO-A1-2014/029405
- WO-A1-2016/012024
- DE-U1-202019 003 218
- US-A1- 2006 156 827

## Description

### Background

The present disclosure relates to an ultrasonic flow meter. More particularly, the present disclosure focuses on a flow meter having a first and a second ultrasound transducer.

Flow meters such as ultrasonic flow meters are commonly employed to record flow signals in appliances for heating, ventilation and/or air conditioning. A flow meter may, for instance, record flow of a fluid such as water or glycol through a flux calorimeter. A quantity indicative of heat transfer can then be derived from the recorded flow and from additional measurements of temperature. Ultrasonic flow meters are also employed to record flow of transformer oil circulating through the ducts of power transformers. A recorded flow value can then be used to adjust speeds of oil pumps while the power transformer is in oil directed and air forced cooling (ODAF) mode.

A European patent application EP0890826A1 was filed on 8 July 1998 and was published on 13 January 1999. EP0890826A1 teaches an ultrasonic flow meter. The flow meter of EP0890826A1 comprises a first 11 and a second ultrasonic transducer 12. The transducers 11, 12 are mounted at different positions along the flow path through an enclosure 1. The first transducer 11 is mounted downstream 15 of the second transducer 12. A plurality of reflectors 13, 14 defines a path for propagation of ultrasonic signals from the first transducer 11 to the second transducer 12.

An application EP2270439A1 for a European patent was filed on 3 July 2009 and was published on 5 January 2011. The patent application EP2270439A1 discloses a flow meter comprising a moulded reflector unit and a method for making the flow meter. The flow meter of EP2270439A1 comprises a pair of reflectors 612, 614. The reflectors 612, 614 are mounted on either side of a measuring tube 602 using brackets 616, 618. The brackets 616, 618 extend away from the measuring tube 602 thereby mounting the reflectors 612, 612 outside the tube.

An international application WO2014/029405A1 was filed on 22 August 2013 and was published on 27 February 2014. WO2014/029405A1 teaches an ultrasonic flow meter comprising a connection arrangement. The flow meter according to WO2014/029405A1 comprises a pair of ultrasonic transducers 6, 7. Three ultrasonic reflectors 8, 9, 10 are fitted into depressions in a guide element 52 inside a meter housing 2. The ultrasonic reflectors 8, 9, 10 provide a path for propagation of ultrasonic signals between the ultrasonic transducers 6, 7.

On 21 July 2014, another international application WO2016/012024A1 was filed. The same application was published on 28 January 2016. WO2016/012024A1 deals with a flow conduit insert for an ultrasonic flow meter. A plurality of fixation elements (FE) is provided inside a flow conduit (FC). The fixation elements (FE) each have a maximum dimension not exceeding eighty percent of the diameter of the flow conduit (FC). Preferably the fixation elements (FE) each have a diameter not exceeding seventy percent of the diameter of the flow conduit (FC). Even more preferably the fixation elements (FE) each have a diameter not exceeding fifty percent of the diameter of the flow conduit (FC).

A European patent application EP0708313A2 was filed on 20 October 1995. The application was published on 24 April 1996. EP0708313A2 teaches an ultrasonic flow meter. The flow meter of EP3199923A1 comprises a three reflectors 9, 10, 11 as well as a pair of ultrasonic transducers 5, 6.

On 26 January 2016, a European patent application EP3199923A1 was filed. The application was published on 2 August 2017. EP3199923A1 teaches an ultrasonic flow meter. The flow meter of EP3199923A1 also comprises three reflectors 12a, 12b, 12c. The reflectors 12a, 12b, 12c are mounted to an inner wall 11 of the meter. An ultrasonic absorber 8 is mounted opposite the central reflector 12c. The document DE 20 2019 003 218 U1 describes an ultrasound-absorbing plastic measuring tube for an ultrasonic flowmeter for determining a quantity of a liquid flowing through it, with: a first opening in the measuring tube for introducing an ultrasonic signal into the liquid flowing therethrough and a second opening in the measuring tube for discharging the ultrasonic signal out of the flowing liquid, which are arranged at a distance one behind the other along the measuring tube; a measuring channel within the measuring tube, which extends between the two openings and through which the liquid flows; and at least two deflection areas for receiving each a deflecting mirror in order to transmit the ultrasonic signal by reflection from the first opening through the measuring channel to the second opening, wherein the measuring channel has a rectangular cross-section perpendicular to the direction of flow of the liquid flowing through it, and has an increasing cross-sectional area in the direction of flow of the liquid.

The present disclosure improves on ultrasonic flow meters. The instant disclosure confers advantages in terms of more accurate measurements of flow rates.

### Summary

The present disclosure provides a flow meter for determining the flow of a fluid through a flow channel.

The flow meter harnesses a pair of ultrasonic transducers and a plurality of reflectors. The ultrasonic transducers in combination with the reflectors define a W-shaped ultrasonic signal path through the flow channel. The flow meter also provides one or several wedges arranged in the fluid path. These wedges narrow the flow channel. Also, an expansion of the fluid path in the vicinity of the one or several wedges is inhibited. The arrangement thus affords improved linearity. In addition, higher flow velocities narrow active cross-sections of a fluid flowing through the fluid path. Higher flow velocities also render the active cross-section more homogeneous as a function of flow velocity. That is, a higher flow velocity in the vicinity of the W-shaped ultrasonic signal path yields improvements on signal quality. A measurement thus becomes more accurate.

A flow meter is thus provided, as defined in claim 1. Further advantageous embodiments are defined by the dependent claims.

It is also an object of the present disclosure to provide a flow meter that is suitable for cost-effective manufacture at large scale.

It is another object of the instant disclosure to provide a flow meter that is mechanically robust.

It is a related object of the present disclosure to provide a flow meter with few components such that the arrangement becomes less prone to failure.

It is yet another object of the present disclosure to provide a flow meter wherein the flow restriction member is an integral part of the flow channel, thereby reducing complexity during manufacture. It is a related object of the present disclosure to provide a flow meter wherein the one or several wedges are integral parts of the flow channel.

It is yet another object of the present disclosure to provide a flow meter wherein at least one wedge is ideally positioned with respect to the W-shaped ultrasonic signal path.

It is also an object of the present disclosure to provide a flow meter with mechanical characteristics that avoid a need for electronic compensation. Electronic compensation of inaccuracies within the meter would otherwise require calibration. Avoidance of electronic compensation also alleviates cost pressures.

It is still an object of the present disclosure to provide a flow meter that largely dispenses with flow guides and largely dispenses with flow straighteners inside the flow channel. Flow guides and flow straighteners are inherently prone to accumulation of dirt particles and contaminants.

### Brief description of the drawings

Various features will become apparent to those skilled in the art from the following detailed description of the disclosed non-limiting embodiments. The drawings that accompany the detailed description can be briefly described as follows:
FIG 1 schematically illustrates a flow meter according to the present disclosure.
FIG 2 schematically illustrates a tubular member employed in the flow meter of the instant disclosure.
FIG 3 illustrates additional details concerning diameters and ports.
FIG 4 illustrates a trapezoidal flow restriction member.
FIG 5 illustrates a flow restriction member with teeth protruding from wedges.

### Detailed decription

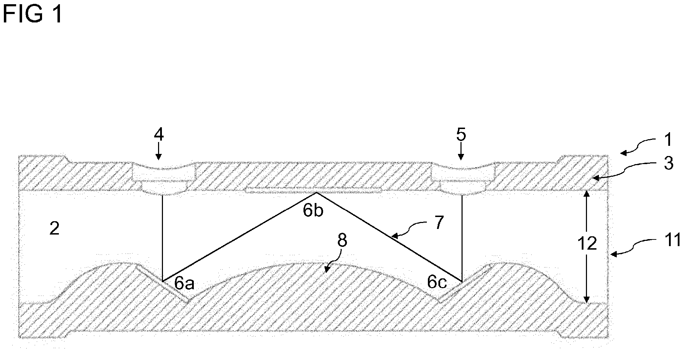

A flow meter 1 according to the present disclosure is shown in FIG 1. It is common to employ such flow meters 1 to estimate and/or determine flow in ducts of an installation for heating, ventilation, and/or air conditioning. Flow meters according to the instant disclosure can also be used to estimate and/or determine oil flow through cooling ducts of power transformers.

The flow meter 1 comprises a flow channel 2 arranged inside a housing 3. The flow channel 2 generally enables flow of a fluid such as water, glycol, mixtures of water and of glycol, oil such as transformer oil, etc. The skilled person chooses a material for the walls of the flow channel 2 that is suitable in view of the type of fluid. The skilled person also selects a material that is compatible with typical temperatures inside the flow channel 2.

In an embodiment, the housing 3 is made of a metallic material such as steel and/or austenitic (stainless) steel and/or ferrite steel. In an alternate embodiment, the housing 3 is made of aluminum (alloy) or gunmetal or brass. In yet another alternate embodiment, the housing 3 is made of a polymeric material. According to an aspect, the housing 3 is manufactured via an additive manufacturing technique such as three-dimensional printing. Manufacture of the housing 3 can, in particular, involve selective laser sintering.

According to an aspect of the present disclosure, the flow channel 2 is or comprises a polymeric member. It is also envisaged that manufacture of the flow channel 2 involves additive manufacturing such as three-dimensional printing. Manufacture of the flow channel 2 can, in particular, involve selective laser sintering.

The flow channel 2 can, by way of non-limiting example, be polymeric or comprise a polymeric member, the polymer being selected from at least one of:
- an epoxy polymer, or
- a polytetrafluoroethylene, or
- a polyethylene polymer, or
- a polyethylene terephthalate polymer, or
- a polyester polymer, or
- a blended form thereof.

The skilled person chooses a material such as a polymer that absorbs ultrasonic waves. That is, the skilled person chooses a material with an acoustic impedance that matches the acoustic impedance of the fluid in the flow channel 2.

According to an aspect, the flow channel 2 is a cylindrical part or a substantially cylindrical part.

Two ultrasonic transducers 4, 5 are mounted to the housing 3. The housing 3 can, in an embodiment, provide ports that receive ultrasonic transducers 4, 5. The ultrasonic transducers 4, 5 are arranged at a distance. That is, one ultrasonic transducer 4 is arranged upstream of the other ultrasonic transducer 5. An upstream direction inside the flow channel 2 is defined by a direction of fluid flow through the flow channel 2. In an embodiment, the ultrasonic transducers 4, 5 are spaced at least twenty millimeters apart. The ultrasonic transducers 4, 5 can also be spaced at least fifty millimeters apart, or even at least one hundred millimeters apart. Long distances between ultrasonic transducers can afford better accuracy.

In an embodiment, the ultrasonic transducer 4 is an ultrasonic emitter as well as an ultrasonic receiver. In an alternate embodiment, the ultrasonic transducer 4 exclusively emits ultrasonic signals but does not receive such signals. In an embodiment, the ultrasonic transducer 5 is an ultrasonic emitter as well as an ultrasonic receiver. In an alternate embodiment, the ultrasonic transducer 5 exclusively receives ultrasonic signals but does not emit such signals. Flow meters 1 with ultrasonic transducers 4, 5 with limited capabilities confer advantages in terms of reduced complexity and cost.

The ultrasonic transducers 4, 5 ideally operate at frequencies above two hundred Kilohertz. According to a special aspect, the ultrasonic transducers 4, 5 operate at frequencies larger than five hundred Kilohertz, or even larger than one Megahertz. Larger frequencies generally reduce interference by other sources of ultrasonic signals.

It is envisaged that the ultrasonic transducer 4 is a piezoelectric transducer. It is also envisaged that the ultrasonic transducer 4 is a capacitive transducer. It is envisaged that the ultrasonic transducer 5 is a piezoelectric transducer. It is also envisaged that the ultrasonic transducer 5 is a capacitive transducer. The two transducers 4, 5 preferably employ the same measurement principle. That is, the two transducers 4, 5 are either both piezoelectric transducers or are both capacitive transducers.

The flow meter 1 comprises at least three reflectors 6a, 6b, 6c arranged inside the flow channel 2. A reflector 6a is preferably arranged in the flow channel 2 opposite the ultrasonic transducer 4. Preferably, another reflector 6c is arranged in the flow channel 2 opposite the ultrasonic transducer 5. The flow meter 1 typically comprises yet another reflector 6b. This reflector 6b is advantageously arranged at or near the centre between the ultrasonic transducers 4, 5. That is, the reflector 6b is arranged in the middle between the ultrasonic transducers 4, 5.

The reflectors 6a, 6b, 6c together with the ultrasonic transducers 4, 5 define a W-shaped signal path 7. As the ultrasonic transducer 4 emits an ultrasonic signal, the same signal propagates through the flow channel 2 to the reflector 6a. The ultrasonic signal is then reflected by the reflector 6a toward reflector the 6b. After reflection at the reflector 6b, the ultrasonic signal propagates through the flow channel 2 toward the reflector 6c. At the reflector 6c the ultrasonic signal is finally reflected toward ultrasonic transducer 5 and received by ultrasonic transducer 5.

In an alternate embodiment, the ultrasonic transducer 5 emits an ultrasonic signal. The same signal propagates through the flow channel 2 to the reflector 6c. The ultrasonic signal is then reflected by the reflector 6c toward reflector the 6b. After reflection at the reflector 6b, the ultrasonic signal propagates through the flow channel 2 toward the reflector 6a. At the reflector 6a the ultrasonic signal is finally reflected toward ultrasonic transducer 4 and received by ultrasonic transducer 4.

The skilled person selects reflectors 6a, 6b, 6c made of or coated with a material that is compatible with the type of fluid inside the flow channel 2. The skilled person also selects reflectors 6a, 6b, 6c made of or coated with a material that is compatible with typical temperatures inside the flow channel 2.

The skilled person chooses a suitable method for mounting the reflectors 6a, 6b, 6c inside the flow channel 2. The reflectors 6a, 6b, 6c are preferably secured to an inner wall of the flow channel 2. The reflectors 6a, 6b, 6c are, more preferably, coupled to or mounted to an inner wall of the flow channel 2. The reflectors 6a, 6b, 6c can, by way of non-limiting example, be glued to an inner wall of the flow channel 2. The reflectors 6a, 6b, 6c can, by way of another non-limiting example, be mounted inside depressions in an inner wall flow channel 2. According to another aspect, at least one of the reflectors 6a, 6b, 6c is mounted inside (a slot of) the flow channel 2 by staking and/or by heat staking. According to yet another aspect of the instant disclosure, at least one of the reflectors 6a, 6b, 6c is mounted inside (a slot of) the flow channel 2 by interference fit.

A flow restriction member 8 is arranged between two of the reflectors 6a, 6c. The flow restriction member 8 is preferably arranged between the two outermost reflectors 6a, 6c. That is, the flow restriction member 8 is arranged between the two reflectors 6a, 6b that are closest to the outlet port 11 and to the inlet port 14 of the flow channel 2.

The flow restriction member 8 advantageously is a protrusion and as such protrudes from an inner wall of the flow channel 2. In an alternate embodiment, the flow restriction member 8 comprises an orifice arranged inside the flow channel 2. The flow restriction member 8 can, in a special embodiment, comprise an orifice with an adjustable opening cross section.

At the narrowest portion of the flow channel 2, the restriction member 8 preferably narrows the channel 2 to at most twenty percent of its cross-section at the outlet port 11. The restriction member 8 more preferably narrows the flow channel 2 to at most fifty percent of its cross-section area at the outlet port 11. The restriction member 8 still more preferably narrows the flow channel 2 to at most seventy percent of its cross-section area at the outlet port 11.

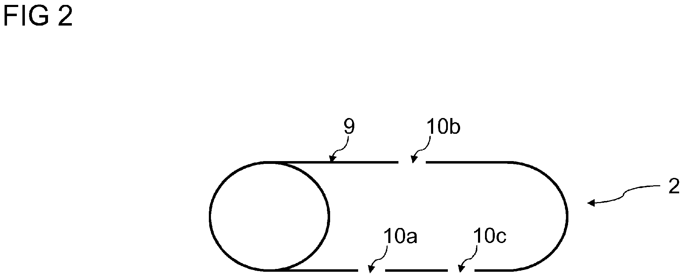

Now referring to FIG 2, a flow channel 2 is shown that comprises a tubular member 9. Apertures 10a, 10b, 10c perforate the walls of the tubular member 9. The apertures 10a, 10b, 10c cooperate with the reflectors 6a, 6b, 6c such that they can receive the reflectors 6a, 6b, 6c. That is, the reflectors 6a, 6b, 6c can be inserted into the flow channel 2 via the apertures 10a, 10b, 10c.

At least one of the apertures 10a, 10b, 10c preferably is a slit. The slit ideally has rectangular shape. The lateral dimensions of the slit can, by way of non-limiting examples, be one millimeter by two millimeters, one and a half millimeters by five millimeters, or two millimeters by ten millimeters. The apertures 10a, 10b, 10c advantageously are a slits. The slits ideally have rectangular shape. The lateral dimensions of the slits can, by way of non-limiting examples, be one millimeter by two millimeters, one and a half millimeters by five millimeters, or two millimeters by ten millimeters.

The tubular member 9 provides a first fluid port and a second fluid port, the second fluid port being arranged opposite the first fluid port. A flow axis is defined by the tubular member 9.

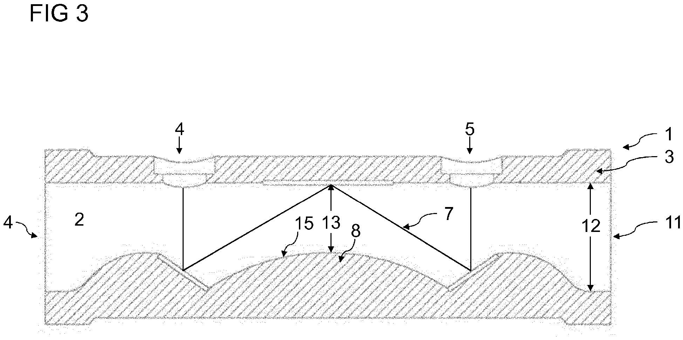

Now turning to FIG 3, a flow meter 1 is shown with an inlet port 14 and with an outlet port 11. The flow channel 2 has a diameter dimension 12 at or near its outlet port 11. The diameter dimension is the minimum diameter dimension 12 between opposite points on the inner wall of the flow channel 2. The flow channel 2 also has a diameter dimension at or near its inlet port 14. The diameter dimension at or near the inlet port 14 is the minimum diameter dimension between opposite points on the inner wall of the flow channel 2.

It is envisaged that the tubular member 9 shown in FIG 2 has an inlet port 14 and an outlet port 11. The tubular member 9 has a diameter dimension 12 at or near its outlet port 11. The diameter dimension 12 is the minimum diameter dimension between opposite points on the inner wall of the tubular member 9. The tubular member 9 also has a diameter dimension at or near its inlet port 14. The diameter dimension at or near the inlet port 14 is the minimum diameter dimension between opposite points on the inner wall of the tubular member 9.

FIG 3 depicts a diameter dimension 13 between the (arcuate) surface 15 of the flow restriction member 8 and the inner wall of flow channel 2. The reflector 6b can, in an embodiment, be mounted at the narrowest portion at or near the flow restriction member 8. That is, the reflector 6b is mounted opposite the (tip of the) flow restriction member 8. The diameter dimension 13 then runs from the (arcuate) surface 15 of the flow restriction member 8 to the reflector 6b. The diameter dimension 13 in this case is the minimum diameter dimension between opposite points on the (arcuate) surface 15 and on the reflector 6b.

In an embodiment, the diameter dimension 13 at the flow restriction member 8 is less than ninety percent of the diameter dimension 12 at or near the outlet port 11. In another embodiment, the diameter dimension 13 at the flow restriction member 8 is less than eighty percent of the diameter dimension 12 at or near the outlet port 11. In yet another embodiment, the diameter dimension 13 at the flow restriction member 8 is less than sixty-five percent of the diameter dimension 12 at or near the outlet port 11.

According to an aspect of the present disclosure, the diameter dimension 13 at the flow restriction member 8 is less than ninety percent of the diameter dimension at or near the inlet port 14. According to another aspect of the present disclosure, the diameter dimension 13 at the flow restriction member 8 is less than eighty percent of the diameter dimension at or near the inlet port 14. According to yet another aspect of the present disclosure, the diameter dimension 13 at the flow restriction member 8 is less than sixty-five percent of the diameter dimension at or near the inlet port 14.

According to an aspect of the instant disclosure, the flow channel 2 is formed by a cylindrical member 9 or a substantially cylindrical member 9 inside the housing 3. It is envisaged that the tubular member 9 is a cylindrical member or a substantially cylindrical member 9.

In an embodiment, the tubular member 9 comprises the flow restriction member 8. The flow restriction member 8 can be an integral part of the tubular member 9.

It is envisaged that the flow meter 1 is a flow meter 1 for determining a flow rate of a fluid. It is also envisaged that the flow meter 1 is a flow meter 1 for estimating a flow rate of a fluid. It is further envisaged that the flow meter 1 is a flow meter 1 for determining a flow rate of a fluid through the flow channel 2. It is still further envisaged that the flow meter 1 is a flow meter 1 for estimating a flow rate of a fluid through the flow channel 2.

The three reflectors 6a, 6b, 6c are ideally configured to reflect the ultrasonic signal emitted by the first ultrasonic transducer 4 three times on its way to the second ultrasonic transducer 5 such that a W-shaped path 7 of the ultrasonic signal is formed.

Ideally, each of the three reflectors 6a, 6b, 6c is or comprises an ultrasonic reflector 6a, 6b, 6c.

In an embodiment, the two ultrasonic transducers 4, 5 are secured to or coupled to or mounted to the housing 3. The housing 3 can provide ports or recesses suitable for mounting the ultrasonic transducers 4, 5.

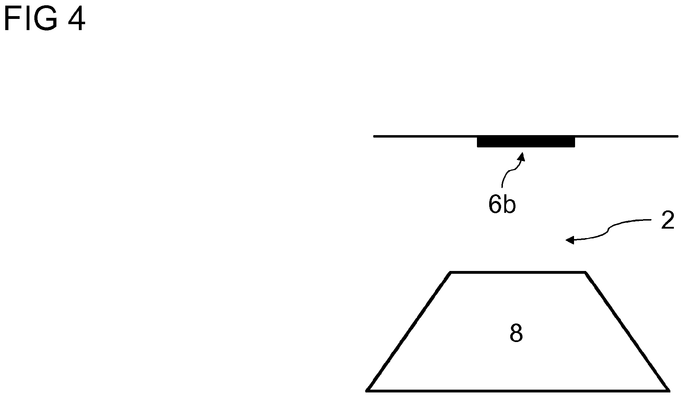

It is also envisaged that the flow restriction member 8 is trapezoidal and/or that the flow restriction member 8 has a trapezoidal profile and/or that the flow restriction member 8 has a trapezoidal cross-section. FIG 4 shows an exemplary embodiment with a trapezoidal flow restriction member 8. In a special embodiment, the flow restriction member 8 is or comprises a trapezoidal prism.

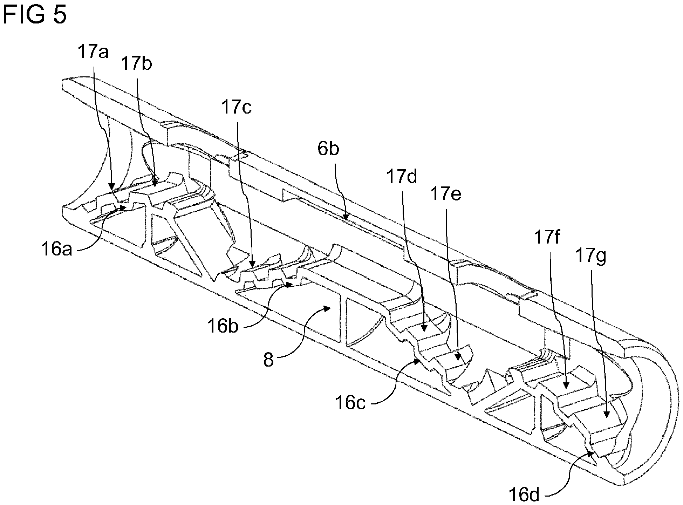

Now turning to FIG 5, a flow meter 1 with several wedges 16a - 16d is shown. The wedges 16a - 16d are arranged inside the flow channel 2 and/or inside the tubular member 9. The wedges 16a - 16d all have at least one tooth 17a - 17g protruding from the wedges 16a - 16d.

The wedges 16a - 16d function to induce turbulence in the flow channel 2. In addition to the wedges 16a - 16d, a plurality of cut teeth 17a - 17g also induce turbulence. The teeth 17a - 17g each provide a cut end projecting into the flow channel 2.

FIG 5 depicts edges of the teeth 17a - 17g. It is envisaged that at least one tooth 17a - 17g provides a concave bridge portion connecting the cut end of the at least one tooth 17a - 17g to the inner surface of the wall of the tubular member 9. It is also envisaged that each tooth 17a - 17g provides a concave bridge portion connecting the cut end of each tooth 17a - 17g to the inner surface of the wall of the tubular member 9.

In a symmetric embodiment, at least one tooth 17a - 17g provides two concave bridge portions. The two concave bridge portions each extend from the tip end of the at least one tooth 17a - 17g to the inner surface of the wall of the tubular member 9. That is, a first concave bridge portion extends from a first side of the tip end of the at least one tooth 17a -17g to the inner surface of the wall of the tubular member 9. A second concave bridge portion extends from a second side of the tip end of the at least one tooth 17a - 17g to the inner surface of the wall of the tubular member 9. The second side of the tip end of the at least one tooth 17a - 17g is situated opposite the first side of the tip end of the at least one tooth 17a - 17g.

According to a related aspect of the present disclosure, all teeth 17a - 17g each provide two concave bridge portions. The two concave bridge portions extend from the tip ends of each tooth 17a - 17g to the inner surface of the wall of the tubular member 9. That is, a first concave bridge portion extends from a first side of each tip end of each tooth 17a - 17g to the inner surface of the wall of the tubular member 9. A second concave bridge portion extends from a second side of each tip end of each tooth 17a - 17g to the inner surface of the wall of the tubular member 9. The second sides of the tip ends of the teeth 17a - 17g are situated opposite the first sides of the tip ends of the teeth 17a - 17g.

In an embodiment, the wedges 16a - 16d are secured to or coupled to or mounted to the housing 3. The housing 3 can provide ports or recesses suitable for mounting the wedges 16a - 16d.

As described in detail herein, the three reflectors 6a, 6b, 6c can couple to the inner surface of the wall. In another embodiment, the three reflectors 6a, 6b, 6c are secured relative to the inner surface of the wall.

The present disclosure also teaches any of the aforementioned flow meters 1, wherein the flow restriction member 8 is different from each of the reflectors 6a, 6b, 6c.

It is envisaged that the outlet port 11 has a first diameter dimension 12; and that
the flow channel 2 has a second diameter dimension 13 at the flow restriction member 8; and that
the second diameter dimension 13 is less than ninety percent, preferably less than seventy percent, or even less than fifty percent, of the first diameter dimension 12.

According to an aspect of the present disclosure, the flow channel 2 has a third diameter dimension at the first wedge 16b, 16c. The third diameter dimension is less than ninety percent, preferably less than seventy percent, or even less than fifty percent, of the first diameter dimension 12.

In an embodiment, the first wedge 16b, 16c is or comprises a first ramp. It is envisaged that the tubular member 9 comprises the first wedge 16b, 16c. According to an aspect of the present disclosure, the first wedge 16b, 16c is mounted to and/or is secured relative to and/or is arranged on the inner surface of the wall of the tubular member 9.

It is envisaged that the first sloped surface faces, advantageously faces the inside of, the flow channel 2. It is also envisaged that the first plurality of teeth 17c - 17e of the first wedge 16b, 16c project into the flow channel 2 and/or into the tubular member 9. According to an aspect of the present disclosure, the first plurality of teeth 17c- 17e comprises at least two teeth, at least five teeth, or even at least ten teeth.

Ideally, the first sloped surface is or comprises an arcuate surface. That is, the first sloped surface has a profile, the profile of the first sloped surface being arcuate. In a related embodiment, the first sloped surface has a profile, the profile of the first sloped surface being a sector of a circle.

Advantageously, the first plurality of teeth 17c - 17e of the first wedge 16b, 16c protrude at least one millimeter, preferably at least two millimeters, yet more preferably at least five millimeters, from the first sloped surface. That is, each tooth of the first plurality of teeth 17c - 17e has a tip end and has a root end. The root end of each tooth of the first plurality of teeth 17c - 17e anchors the respective tooth 17c - 17e to the first wedge 16b, 16c. Each tip end of a tooth of the first plurality of teeth 17c- 17e is at least one millimeter, preferably at least two millimeters, yet more preferably at least five millimeters from its respective root end.

In an embodiment, a first section of a cogwheel forms the first wedge 16b, 16c, the first sloped surface, and the first plurality of teeth 17c - 17e of the first wedge 16b, 16c. It is envisaged that the first section of a cogwheel comprises the first wedge 16b, 16c, the first sloped surface, and the first plurality of teeth 17c - 17e of the first wedge 16b, 16c.

In a related embodiment, a first sector of a cogwheel forms the first wedge 16b, 16c, the first sloped surface, and the first plurality of teeth 17c - 17e of the first wedge 16b, 16c. It is envisaged that the first sector of a cogwheel comprises the first wedge 16b, 16c, the first sloped surface, and the first plurality of teeth 17c - 17e of the first wedge 16b, 16c.

The first sloped surface is an outer surface of the first wedge 16b, 16c.

The present disclosure further teaches any of the aforementioned flow meters 1, wherein the flow restriction member 8 has a first side and has a second side, the second side being arranged opposite the first side;
wherein the first wedge 16b, 16c is disposed on the first side of the flow restriction member 8;
wherein the flow restriction member 8 comprises a second wedge 16c, 16b having a second sloped surface; and
wherein the second wedge 16c, 16b comprises at least one tooth 17c - 17e protruding from the second sloped surface.

According to an aspect of the present disclosure, the flow channel 2 has a fourth diameter dimension at the second wedge 16c, 16b. The fourth diameter dimension is less than ninety percent, preferably less than seventy percent, or even less than fifty percent, of the first diameter dimension 12.

In an embodiment, the second wedge 16c, 16b is or comprises a second ramp. It is envisaged that the tubular member 9 comprises the second wedge 16c, 16b. According to an aspect of the present disclosure, the second wedge 16c, 16b is mounted to and/or is secured relative to and/or is arranged on the inner surface of the wall of the tubular member 9.

It is envisaged that the second sloped surface faces the inside of the flow channel 2 and/or faces the inside of the tubular member 9. It is also envisaged that the at least one tooth 17c - 17e of the second wedge 16c, 16b projects into the flow channel 2 and/or projects into the tubular member 9.

Ideally, the second sloped surface is or comprises an arcuate surface. That is, the second sloped surface has a profile, the profile of the second sloped surface being arcuate. In a related embodiment, the second sloped surface has a profile, the profile of the second sloped surface being a sector of a circle.

Advantageously, the at least one tooth 17c - 17e of the second wedge 16c, 16b protrudes at least one millimeter, preferably at least two millimeters, yet more preferably at least five millimeters, from the second sloped surface. That is, the at least one tooth 17c - 17e of the second wedge 16c, 16b has a tip end and has a root end. The root end of the at least one tooth 17c - 17e of the second wedge 16c, 16b anchors the at least one tooth 17c - 17e of the second wedge 16c, 16b to the second wedge 16c, 16b. The tip end of the at least one tooth 17c - 17e of the second wedge 16c, 16b is at least one millimeter, preferably at least two millimeters, yet more preferably at least five millimeters from its root end.

In an embodiment, a second section of a cogwheel forms the second wedge 16c, 16b, the second sloped surface, and the at least one tooth 17c - 17e of the second wedge 16c, 16b. It is envisaged that the second section of a cogwheel comprises the second wedge 16c, 16b, the second sloped surface, and the at least one tooth 17c - 17e of the second wedge 16c, 16b.

In a related embodiment, a second sector of a cogwheel forms the second wedge 16c, 16b, the second sloped surface, and the at least one tooth 17c - 17e of the second wedge 16c, 16b. It is envisaged that the second sector of a cogwheel comprises the second wedge 16c, 16b, the second sloped surface, and the at least one tooth 17c - 17e of the second wedge 16c, 16b.

The second wedge 16c, 16b is different from the first wedge 16b, 16c.

The second sloped surface is an outer surface of the second wedge 16c, 16b. The second sloped surface is different from the first sloped surface.

The present disclosure further teaches any of the aforementioned flow meters 1,
wherein the second wedge 16c, 16b comprises a second plurality of teeth 17c - 17e protruding from the second sloped surface.

According to an aspect of the instant disclosure, the second plurality of teeth 17c - 17e of the second wedge 16c, 16b project into the flow channel 2 and/or into the tubular member 9. It is envisaged that the second plurality of teeth 17c - 17e comprises at least two teeth, at least five teeth, or even at least ten teeth.

Advantageously, the second plurality of teeth 17c - 17e of the second wedge 16c protrude at least one millimeter, preferably at least two millimeters, yet more preferably at least five millimeters, from the second sloped surface. That is, each tooth of the second plurality of teeth 17c - 17e has a tip end and has a root end. The root end of each tooth of the second plurality of teeth 17c - 17e anchors the respective tooth 17c - 17e to the second wedge 16c, 16b. Each tip end of a tooth of the second plurality of teeth 17c - 17e is at least one millimeter, preferably at least two millimeters, yet more preferably at least five millimeters from its respective root end.

In an embodiment, a third section of a cogwheel forms the second wedge 16c, 16b, the second sloped surface, and the second plurality of teeth 17c - 17e of the second wedge 16c, 16b. It is envisaged that the third section of a cogwheel comprises the second wedge 16c, 16b, the second sloped surface, and the second plurality of teeth 17c - 17e of the second wedge 16c, 16b.

In a related embodiment, a third sector of a cogwheel forms the second wedge 16c, 16b, the second sloped surface, and the second plurality of teeth 17c - 17e of the second wedge 16c, 16b. It is envisaged that the third sector of a cogwheel comprises the second wedge 16c, 16b, the second sloped surface, and the second plurality of teeth 17c - 17e of the second wedge 16c, 16b.

The present disclosure also teaches any of the aforementioned flow meters 1,
wherein the flow restriction member 8 protrudes from the inner surface of the wall into the tubular member 9.

In an embodiment, the flow restriction member 8 protrudes from the inner surface of the wall into the flow channel 2. It is also envisaged that the flow restriction member 8 projects from the inner surface of the wall into the flow channel 2.

The present disclosure further teaches any of the aforementioned flow meters 1,
wherein the flow channel 2 comprises an outlet port 11;
wherein the flow channel 2 comprises an inlet port 14, the inlet port 14 being arranged opposite the outlet port 11 and a fluid path extending from the inlet port 14 to the outlet port 11;
wherein the three reflectors 6a, 6b, 6c comprise a first reflector 6c, the first reflector 6c being disposed closest to the outlet port 11 amongst the three reflectors 6a, 6b, 6c;
wherein the three reflectors 6a, 6b, 6c comprise a second reflector 6a, the second reflector 6a being disposed closest to the inlet port 14 amongst the three reflectors 6a, 6b, 6c; and
wherein the flow restriction member 8 is interposed between the first reflector 6c and the second reflector 6a.

The second reflector 6a advantageously is disposed geometrically closest to the inlet port 14 amongst the three reflectors 6a, 6b, 6c. The first reflector 6c advantageously is also disposed geometrically closest to the outlet port 11 amongst the three reflectors 6a, 6b, 6c.

Advantageously, the flow channel 2 extends from the inlet port 14 to the outlet port 11.

It is envisaged that the tubular member 9 comprises an outlet port 11 and that the tubular member 9 comprises an inlet port 14, the inlet port 14 being arranged opposite the outlet port 11, and a fluid path extending from the inlet port 14 to the outlet port 11.

The instant disclosure still teaches any of the aforementioned flow meters 1 having an inlet port 14 and having an outlet port 11,
wherein the first side of the flow restriction member 8 faces the inlet port 14; and
wherein the second side of the flow restriction member 8 faces the outlet port 11.

The first side of the flow restriction member 8 ideally points in the direction of the inlet port 14. The second side of the flow restriction member 8 ideally points in the direction of the outlet port 11.

Preferably, the first wedge 16b, 16c of the flow restriction member 8 faces the inlet port 14; and the second wedge 16c, 16b of the flow restriction member 8 faces the outlet port 11.

Advantageously, the first wedge 16b, 16c of the flow restriction member 8 points in the direction of the inlet port 14; and
the second wedge 16c, 16b of the flow restriction member 8 points in the direction of the outlet port 11.

The instant disclosure further teaches any of the aforementioned flow meters 1 having an outlet port 11, wherein the flow channel 2 comprises a third wedge 16d having a third sloped surface;
wherein the third wedge 16d comprises at least one tooth 17f - 17g protruding from the third sloped surface; and
wherein the third wedge 16d is disposed between the first reflector 6c and the outlet port 11.

According to an aspect of the present disclosure, the flow channel 2 has a fifth diameter dimension at the third wedge 16d. The fifth diameter dimension is less than ninety percent, preferably less than seventy percent, or even less than fifty percent, of the first diameter dimension 12.

In an embodiment, the third wedge 16d is or comprises a third ramp. It is envisaged that the tubular member 9 comprises the third wedge 16d. According to an aspect of the present disclosure, the third wedge 16d is mounted to and/or is secured relative to and/or is arranged on the inner surface of the wall of the tubular member 9.

It is envisaged that the third sloped surface faces the inside of the flow channel 2 and/or faces the inside of the tubular member 9. It is also envisaged that the at least one tooth 17f - 17g of the third wedge 16d projects into the flow channel 2 and/or projects into the tubular member 9.

Ideally, the third sloped surface is or comprises an arcuate surface. That is, the third sloped surface has a profile, the profile of the third sloped surface being arcuate. In a related embodiment, the third sloped surface has a profile, the profile of the third sloped surface being a sector of a circle.

Advantageously, the at least one tooth 17f - 17g of the third wedge 16d protrudes at least one millimeter, preferably at least two millimeters, yet more preferably at least five millimeters, from the third sloped surface. That is, the at least one tooth 17f - 17g of the third wedge 16d has a tip end and has a root end. The root end of the at least one tooth 17f - 17g of the third wedge 16d anchors the at least one tooth 17f - 17g of the third wedge 16d to the third wedge 16d. The tip end of the at least one tooth 17f - 17g of the third wedge 16d is at least one millimeter, preferably at least two millimeters, yet more preferably at least five millimeters from its root end.

In an embodiment, a fourth section of a cogwheel forms the third wedge 16d, the third sloped surface, and the at least one tooth 17f - 17g of the third wedge 16d. It is envisaged that the fourth section of a cogwheel comprises the third wedge 16d, the third sloped surface, and the at least one tooth 17f - 17g of the third wedge 16d.

In a related embodiment, a fourth sector of a cogwheel forms the third wedge 16d, the third sloped surface, and the at least one tooth 17f - 17g of the third wedge 16d. It is envisaged that the fourth sector of a cogwheel comprises the third wedge 16d, the third sloped surface, and the at least one tooth 17f - 17g of the third wedge 16d.

The third wedge 16d is different from the second wedge 16c, 16b. The third wedge 16d is also different from the first wedge 16b, 16c.

The third sloped surface is an outer surface of the third wedge 16d. The third sloped surface is different from the second sloped surface. The third sloped surface is also different from the first sloped surface.

The instant disclosure also teaches any of the aforementioned flow meters 1 having a third wedge 16d, wherein the third wedge 16d comprises a third plurality of teeth 17f - 17g protruding from the third sloped surface.

According to an aspect of the instant disclosure, the third plurality of teeth 17f - 17g of the third wedge 16d project into the flow channel 2 and/or into the tubular member 9. It is envisaged that the third plurality of teeth 17f - 17g comprises at least two teeth, at least five teeth, or even at least ten teeth.

Advantageously, the third plurality of teeth 17f - 17g of the third wedge 16d protrude at least one millimeter, preferably at least two millimeters, yet more preferably at least five millimeters, from the third sloped surface. That is, each tooth of the third plurality of teeth 17f - 17g has a tip end and has a root end. The root end of each tooth of the third plurality of teeth 17f - 17g anchors the respective tooth 17f - 17g to the third wedge 16d. Each tip end of a tooth of the third plurality of teeth 17f - 17g is at least one millimeter, preferably at least two millimeters, yet more preferably at least five millimeters from its respective root end.

In an embodiment, a fifth section of a cogwheel forms the third wedge 16d, the third sloped surface, and the third plurality of teeth 17f - 17g of the third wedge 16d. It is envisaged that the fifth section of a cogwheel comprises the third wedge 16d, the third sloped surface, and the third plurality of teeth 17f - 17g of the third wedge 16d.

In a related embodiment, a fifth sector of a cogwheel forms the third wedge 16d, the third sloped surface, and the third plurality of teeth 17f - 17g of the third wedge 16d. It is envisaged that the fifth sector of a cogwheel comprises the third wedge 16d, the third sloped surface, and the third plurality of teeth 17f - 17g of the third wedge 16d.

The instant disclosure further teaches any of the aforementioned flow meters 1 having an inlet port 14,
wherein the flow channel 2 comprises a fourth wedge 16a having a fourth sloped surface;
wherein the fourth wedge 16a comprises at least one tooth 17a - 17b protruding from the fourth sloped surface; and
wherein the fourth wedge 16a is disposed between the second reflector 6a and the inlet port 14.

According to an aspect of the present disclosure, the flow channel 2 has a sixth diameter dimension at the first wedge 16a. The sixth diameter dimension is less than ninety percent, preferably less than seventy percent, or even less than fifty percent, of the first diameter dimension 12.

In an embodiment, the fourth wedge 16a is or comprises a fourth ramp. It is envisaged that the tubular member 9 comprises the fourth wedge 16a. According to an aspect of the present disclosure, the fourth wedge 16a is mounted to and/or is secured relative to and/or is arranged on the inner surface of the wall of the tubular member 9.

It is envisaged that the fourth sloped surface faces, advantageously faces the inside of, the flow channel 2 and/or faces, advantageously faces the inside of, the tubular member 9. It is also envisaged that the at least one tooth 17a - 17b of the fourth wedge 16a projects into the flow channel 2 and/or projects into the tubular member 9.

Ideally, the fourth sloped surface is or comprises an arcuate surface. That is, the fourth sloped surface has a profile, the profile of the fourth sloped surface being arcuate. In a related embodiment, the fourth sloped surface has a profile, the profile of the fourth sloped surface being a sector of a circle.

Advantageously, the at least one tooth 17a - 17b of the fourth wedge 16a protrudes at least one millimeter, preferably at least two millimeters, yet more preferably at least five millimeters, from the fourth sloped surface. That is, the at least one tooth 17a - 17b of the fourth wedge 16a has a tip end and has a root end. The root end of the at least one tooth 17a - 17b of the fourth wedge 16a anchors the at least one tooth 17a - 17b of the fourth wedge 16a to the fourth wedge 16a. The tip end of the at least one tooth 17a - 17b of the fourth wedge 16a is at least one millimeter, preferably at least two millimeters, yet more preferably at least five millimeters from its root end.

In an embodiment, a sixth section of a cogwheel forms the fourth wedge 16a, the fourth sloped surface, and the at least one tooth 17a - 17b of the fourth wedge 16a. It is envisaged that the sixth section of a cogwheel comprises the fourth wedge 16a, the fourth sloped surface, and the at least one tooth 17a - 17b of the fourth wedge 16a.

In a related embodiment, a sixth sector of a cogwheel forms the fourth wedge 16a, the fourth sloped surface, and the at least one tooth 17a - 17b of the fourth wedge 16a. It is envisaged that the sixth sector of a cogwheel comprises the fourth wedge 16a, the fourth sloped surface, and the at least one tooth 17a - 17b of the fourth wedge 16a.

The fourth wedge 16a is different from the third wedge 16d. The fourth wedge 16a is also different from the second wedge 16c, 16b. The fourth wedge 16a is still different from the first wedge 16b, 16c.

The fourth sloped surface is an outer surface of the fourth wedge 16a. The fourth sloped surface is different from the third sloped surface. The fourth sloped surface is also different from the second sloped surface. The fourth sloped surface is still different from the first sloped surface.

The instant disclosure further teaches any of the aforementioned flow meters 1 having a fourth wedge 16a,
wherein the fourth wedge 16a comprises a fourth plurality of teeth 17a - 17b protruding from the fourth sloped surface.

According to an aspect of the instant disclosure, the fourth plurality of teeth 17a - 17b of the fourth wedge 16a project into the flow channel 2 and/or into the tubular member 9. It is envisaged that the fourth plurality of teeth 17a - 17b comprises at least two teeth, at least five teeth, or even at least ten teeth.

Advantageously, the fourth plurality of teeth 17a - 17b of the fourth wedge 16a protrude at least one millimeter, preferably at least two millimeters, yet more preferably at least five millimeters, from the fourth sloped surface. That is, each tooth of the fourth plurality of teeth 17a - 17b has a tip end and has a root end. The root end of each tooth of the fourth plurality of teeth 17a - 17b anchors the respective tooth 17f - 17g to the fourth wedge 16a. Each tip end of a tooth of the fourth plurality of teeth 17a - 17b is at least one millimeter, preferably at least two millimeters, yet more preferably at least five millimeters from its respective root end.

In an embodiment, a seventh section of a cogwheel forms the fourth wedge 16a, the fourth sloped surface, and the fourth plurality of teeth 17a - 17b of the fourth wedge 16a. It is envisaged that the seventh section of a cogwheel comprises the fourth wedge 16a, the fourth sloped surface, and the fourth plurality of teeth 17a - 17b of the fourth wedge 16a.

In a related embodiment, a seventh sector of a cogwheel forms the fourth wedge 16a, the fourth sloped surface, and the fourth plurality of teeth 17a - 17b of the fourth wedge 16a. It is envisaged that the seventh sector of a cogwheel comprises the fourth wedge 16a, the fourth sloped surface, and the fourth plurality of teeth 17a - 17b of the fourth wedge 16a.

The instant disclosure further teaches any of the aforementioned flow meters 1 having an outlet port 11, wherein the three reflectors 6a, 6b, 6c comprise a third reflector 6b, the third reflector 6b being disposed centrally in between the outlet port 11 and the inlet port 14; and
wherein the flow restriction member 8 is arranged opposite the third reflector 6b.

The flow restriction member 8 is arranged in the flow channel 2 and opposite the third reflector 6b. The flow restriction member 8 is also arranged inside the tubular member 9 and opposite the third reflector 6b.

According to an aspect of the present disclosure, the flow restriction member 8 is arranged inside the flow channel 2 opposite the third reflector 6b. According to another aspect of the present disclosure, the flow restriction member 8 is arranged inside the tubular member 9 opposite the third reflector 6b. The tubular member 9 preferably comprises the flow restriction member 8 and the third reflector 6b.

In an embodiment, the third reflector 6b is disposed geometrically in the centre, preferably in the middle, between the outlet port 11 and the inlet port 14. In a related embodiment, the third reflector 6b is disposed geometrically in the centre, preferably in the middle, between the first reflector 6c and the second reflector 6a.

The instant disclosure also teaches any of the aforementioned flow meters 1, wherein the first plurality of teeth 17c - 17e comprises at least one cut tooth.

The at least one cut tooth of the first plurality of teeth 17c - 17e has a tip end and has a root end. The root end of the at least one cut tooth of the first plurality of teeth 17c - 17e anchors the at least one cut tooth of the first plurality of teeth 17c - 17e to the first wedge 16b, 16c. The tip end is disposed opposite the root end along the at least one cut tooth of the first plurality of teeth 17c - 17e. The at least one cut tooth of the first plurality of teeth 17c- 17e is cut at its tip end.

The present disclosure further teaches any of the aforementioned flow meters 1 having at least one cut tooth, wherein the first plurality of teeth 17c - 17e is a first plurality of cut teeth 17c - 17e.

Each cut tooth of the first plurality of cut teeth 17c - 17e has a tip end and has a root end. The root end of each cut tooth of the first plurality of cut teeth 17c - 17e anchors each cut tooth of the first plurality of cut teeth 17c - 17e to the first wedge 16b, 16c. The tip end of each cut tooth of the first plurality of cut teeth 17c - 17e is disposed opposite the root end of each cut tooth of the first plurality of cut teeth 17c - 17e along the respective cut tooth of the first plurality of cut teeth 17c - 17e. Each cut tooth of the first plurality of cut teeth 17c - 17e is cut at its tip end.

The present disclosure also teaches a flow meter 1 having a second plurality of teeth 17c - 17e, wherein the second plurality of teeth 17c - 17e comprises at least one cut tooth.

The at least one cut tooth of the second plurality of teeth 17c - 17e has a tip end and has a root end. The root end of the at least one cut tooth of the second plurality of teeth 17c - 17e anchors the at least one cut tooth of the second plurality of teeth 17c - 17e to the second wedge 16c, 16b. The tip end is disposed opposite the root end along the at least one cut tooth of the second plurality of teeth 17c - 17e. The at least one cut tooth of the second plurality of teeth 17c - 17e is cut at its tip end.

The present disclosure also teaches a flow meter 1 having a second plurality of teeth 17c - 17e, wherein the second plurality of teeth 17c - 17e is a second plurality of cut teeth 17c - 17e.

Each cut tooth of the second plurality of cut teeth 17c - 17e has a tip end and has a root end. The root end of each cut tooth of the second plurality of cut teeth 17c - 17e anchors each cut tooth of the second plurality of cut teeth 17c - 17e to the second wedge 16c, 16b. The tip end of each cut tooth of the second plurality of cut teeth 17c - 17e is disposed opposite the root end of each cut tooth of the second plurality of cut teeth 17c - 17e along the respective cut tooth of the second plurality of cut teeth 17c - 17e. Each cut tooth of the second plurality of cut teeth 17c - 17e is cut at its tip end.

The present disclosure also teaches a flow meter 1 having a third plurality of teeth 17f - 17g, wherein the third plurality of teeth 17f - 17g is a third plurality of cut teeth 17f - 17g.

Each cut tooth of the third plurality of cut teeth 17f - 17g has a tip end and has a root end. The root end of each cut tooth of the third plurality of cut teeth 17f - 17g anchors each cut tooth of the third plurality of cut teeth 17f - 17g to the third wedge 16d. The tip end of each cut tooth of the third plurality of cut teeth 17f - 17g is disposed opposite the root end of each cut tooth of the third plurality of cut teeth 17f - 17g along the respective cut tooth of the third plurality of cut teeth 17f - 17g. Each cut tooth of the third plurality of cut teeth 17f - 17g is cut at its tip end.

The present disclosure also teaches a flow meter 1 having a fourth plurality of teeth 17a - 17b, wherein the fourth plurality of teeth 17a - 17b is a fourth plurality of cut teeth 17a - 17b.

Each cut tooth of the fourth plurality of cut teeth 17a - 17b has a tip end and has a root end. The root end of each cut tooth of the fourth plurality of cut teeth 17a - 17b anchors each cut tooth of the fourth plurality of cut teeth 17a - 17b to the fourth wedge 16a. The tip end of each cut tooth of the fourth plurality of cut teeth 17a - 17b is disposed opposite the root end of each cut tooth of the fourth plurality of cut teeth 17a - 17b along the respective cut tooth of the fourth plurality of cut teeth 17a - 17b. Each cut tooth of the fourth plurality of cut teeth 17a - 17b is cut at its tip end.

The present disclosure still teaches any of the aforementioned flow meters 1, wherein the tubular member 9 comprises a polymeric portion; and
wherein manufacture of the tubular member 9 involves injection moulding.

In an embodiment, the tubular member 9 is a polymeric member. It is also envisaged that manufacture of the tubular member 9 involves additive manufacturing such as three-dimensional printing.

The present disclosure also teaches any of the aforementioned flow meters 1, wherein the housing 3 comprises a polymeric portion.

Manufacture of the housing 3 advantageously involves injection moulding. It is also envisaged that manufacture of the housing 3 involves additive manufacturing such as three-dimensional printing.

The instant disclosure also teaches any of the aforementioned flow meters 1,
wherein the three reflectors 6a, 6b, 6c are configured to reflect the ultrasonic signal emitted by the first ultrasonic transducer 4 multiple times on its way to the second ultrasonic transducer 5 such that a W-shaped path 7 of the ultrasonic signal is formed.

It is envisaged that the three reflectors 6a, 6b, 6c comprise an outer reflector 6a opposite the first transducer 4 and a central reflector 6b and an outer reflector 6c opposite the second transducer 5, the outer reflector 6a opposite the first transducer 4 being configured to reflect the ultrasonic signal emitted by the first ultrasonic transducer 4 toward the central reflector 6b, the central reflector 6b being configured to reflect the ultrasonic signal received from the outer reflector 6a opposite the first transducer 4 toward the outer reflector 6c opposite the second transducer 5, the outer reflector 6c opposite the second transducer 5 being configured to reflect the ultrasonic signal received from the central reflector 6b toward the second ultrasonic transducer 5 such that a W-shaped path 7 of the ultrasonic signal is formed.

The instant disclosure also teaches any of the aforementioned flow meters 1,
wherein the housing 3 comprises a polymeric portion.

It is envisaged that the housing 3 is made of a polymer such as a glass-fibre reinforced polymer (amide).

According to an aspect of the instant disclosure, the housing 3 is a metallic housing. It is envisaged that manufacture the housing 3 is made of and/or comprises a portion made of
- ferrite steel, or
- austenitic steel, or
- aluminum, or
- gunmetal, or
- copper, or
- an alloy thereof.

The instant disclosure also teaches any of the aforementioned flow meters 1,
wherein the tubular member 9 comprises a polymeric portion.

It is envisaged that the tubular member is made of a polymer such as a glass-fibre reinforced polymer (amide).

The instant disclosure also teaches any of the aforementioned flow meters 1,
wherein the wall comprises three apertures 10a, 10b, 10c, each aperture 10a, 10b, 10c perforating the wall and being configured for insertion of one of the reflectors 6a, 6b, 6c into the tubular member 9.

The instant disclosure also teaches any of the aforementioned flow meters 1,
wherein at least one of one of the reflectors 6a, 6b, 6c is mounted to the wall of the tubular member 9 using injection moulding.

It is envisaged that at least one aperture 10a, 10b, 10c is shaped and/or has dimensions to enable insertion of at least one reflector 6a, 6b, 6c into the tubular member 9. It is also envisaged that each aperture 10a, 10b, 10c is shaped and/or has dimensions to enable insertion/reception of one of the reflectors 6a, 6b, 6c into the tubular member 9. It is further envisaged that the wall comprises three apertures 10a, 10b, 10c, each aperture 10a, 10b, 10c perforating the wall and being associated with (a different) one of the reflectors 6a, 6b, 6c, each aperture 10a, 10b, 10c being configured for insertion/reception of its associated reflector 6a, 6b, 6c into the tubular member 9.

The instant disclosure also teaches any of the aforementioned flow meters 1,
wherein the tubular member 9 comprises an inside portion, the inner surface of the wall enveloping the inside portion of the tubular member 9; and
wherein the three reflectors 6a, 6b, 6c are mounted to the inner surface of the wall.

In an embodiment, the three reflectors 6a, 6b, 6c couple to the inner surface of the wall. In another embodiment, the three reflectors 6a, 6b, 6c are secured relative to the inner surface of the wall.

It is envisaged that the inside portion of the tubular member 9 comprises a fluid path.

Ideally, the flow restriction member 8 protrudes from the inner surface of the wall into the inside portion of the tubular member 9.

The first diameter dimension 12 advantageously is the minimum distance between opposite points along the inner surface at the outlet port 11. The second diameter dimension 13 advantageously is the minimum distance between opposite points along an outer surface of the flow restriction member 8 and the (inner) wall of the tubular member 9. In an embodiment, the second diameter dimension 13 is the minimum distance between the flow restriction member 8 and a point opposite the flow restriction member 8 on the inner surface. The third diameter dimension advantageously is the minimum distance between opposite points along an outer surface of the first wedge 16b, 16c and the inner surface wall of the tubular member 9. In an embodiment, the third diameter dimension is the minimum distance between the first wedge 16b, 16c and a point opposite the first wedge 16b, 16c on the inner surface of the wall of the tubular member 9. The fourth diameter dimension advantageously is the minimum distance between opposite points along an outer surface of the second wedge 16c, 16b and the inner surface wall of the tubular member 9. In an embodiment, the fourth diameter dimension is the minimum distance between the second wedge 16c, 16b and a point opposite the second wedge 16c, 16b on the inner surface of the wall of the tubular member 9. The fifth diameter dimension advantageously is the minimum distance between opposite points along an outer surface of the third wedge 16d and the inner surface wall of the tubular member 9. In an embodiment, the fifth diameter dimension is the minimum distance between the third wedge 16d and a point opposite the third wedge 16d on the inner surface of the wall of the tubular member 9. The sixth diameter dimension advantageously is the minimum distance between opposite points along an outer surface of the fourth wedge 16a and the inner surface wall of the tubular member 9. In an embodiment, the sixth diameter dimension is the minimum distance between the fourth wedge 16a and a point opposite the fourth wedge 16a on the inner surface of the wall of the tubular member 9.

According to an aspect of the instant disclosure, the tubular member 9 comprises the outlet port 11. The tubular member 9 preferably has a first end with a first fluid port and a second end with a second fluid port, the second end being disposed opposite the first end. The outlet port 11 is disposed at the first end of the tubular member 9.

The instant disclosure also teaches any of the aforementioned flow meters 1,
wherein the flow restriction member 8 extends between two out of the three reflectors 6a, 6b, 6c.

The instant disclosure also teaches any of the aforementioned flow meters 1,
wherein the W-shaped path 7 of the ultrasonic signal defines a plane;
wherein the flow restriction member 8 has a profile in the plane defined by the W-shaped path 7;
wherein the profile of the flow restriction member 8 comprises an arcuate segment 15;
wherein the arcuate segment 15 has a first end and a second end, the second end being disposed opposite the first end, and an arc length dimension between the first end and the second end;
wherein the flow channel 2 comprises an outlet port 11;
wherein the flow channel 2 has an outlet diameter dimension 12 at its outlet port 11; and
wherein the arc length dimension is at least half the outlet diameter dimension 12.

In an embodiment, the arc length dimension is larger than the outlet diameter dimension 12. In a special embodiment, the arc length dimension is at least twice the outlet diameter dimension 12. According to an aspect, the arc length dimension is at least two millimeters, preferably at least five millimeters, more preferably at least ten millimeters. Long arc length dimensions improve on linearity.

It is envisaged that the profile of the flow restriction member 8 comprises a triangular segment; wherein the triangular segment has a first end and a second end, the second end being disposed opposite the first end, and a length dimension between the first end and the second end; wherein the flow channel 2 comprises an outlet port 11; wherein the flow channel 2 has an outlet diameter dimension 12 at its outlet port 11; and wherein the length dimension of the triangular segment is at least half the outlet diameter dimension 12. In an embodiment, the length dimension of the triangular segment is larger than the outlet diameter dimension 12. In a special embodiment, the length dimension of the triangular segment is at least twice the outlet diameter dimension 12. According to an aspect, the length dimension of the triangular segment is at least two millimeters, preferably at least five millimeters, more preferably at least ten millimeters. Long length dimensions of the triangular segment improve on linearity.

It is also envisaged that the profile of the flow restriction member 8 comprises a rectangular segment; wherein the rectangular segment has a first end and a second end, the second end being disposed opposite the first end, and a length dimension between the first end and the second end; wherein the flow channel 2 comprises an outlet port 11; wherein the flow channel 2 has an outlet diameter dimension 12 at its outlet port 11; and wherein the length dimension of the rectangular segment is at least half the outlet diameter dimension 12. In an embodiment, the length dimension of the rectangular segment is larger than the outlet diameter dimension 12. In a special embodiment, the length dimension of the rectangular segment is at least twice the outlet diameter dimension 12. According to an aspect, the length dimension of the rectangular segment is at least two millimeters, preferably at least five millimeters, more preferably at least ten millimeters. Long length dimensions of the rectangular segment improve on linearity.

It should be understood that the foregoing relates only to certain embodiments of the disclosure and that numerous changes can be made therein without departing from the scope of the disclosure as defined by the following claims. It should also be understood that the disclosure is not restricted to the illustrated embodiments and that various modifications can be made within the scope of the following claims.

### Reference numerals

1 flow meter
2 flow channel
3 housing
4, 5 ultrasound transducers
6a, 6b, 6c reflectors
7 W-shaped path
8 flow restriction member
9 tubular member
10a, 10b, 10c apertures
11 outlet port
12 diameter dimension
13 diameter dimension
14 inlet port
15 arcuate surface
16a - 16d wedges
17a - 17g teeth

## Claims

1. A flow meter (1) comprising:
a housing (3) and a flow channel (2) arranged inside the housing (3);
two ultrasonic transducers (4, 5) disposed along the flow channel (2) and arranged at a distance from one another, wherein the first ultrasonic transducer (4) is configured to emit an ultrasonic signal into the flow channel (2) and the second ultrasonic transducer (5) is configured to receive the ultrasonic signal emitted by the first ultrasonic transducer (4);
three reflectors (6a, 6b, 6c) arranged inside the flow channel (2), the three reflectors (6a, 6b, 6c) being configured to reflect the ultrasonic signal emitted by the first ultrasonic transducer (4) multiple times on its way to the second ultrasonic transducer (5) such that a W-shaped path (7) of the ultrasonic signal is formed;
wherein the flow channel (2) is formed by a tubular member (9) inside the housing (3);
wherein the tubular member (9) comprises a wall having an inner surface, the reflectors (6a, 6b, 6c) being arranged on the inner surface of the wall;
wherein the flow channel (2) comprises a flow restriction member (8), the flow restriction member (8) being interposed between two out of the three reflectors (6a, 6b, 6c);
wherein the flow restriction member (8) comprises a first wedge (16b, 16c) having a first sloped surface;
wherein the first wedge (16b, 16c) comprises a first plurality of teeth (17c - 17e) protruding from the first sloped surface,
wherein the flow channel (2) comprises an outlet port (11);
wherein the flow channel (2) comprises an inlet port (14), the inlet port (14) being arranged opposite the outlet port (11) and a fluid path extending from the inlet port (14) to the outlet port (11);
wherein the three reflectors (6a, 6b, 6c) comprise a first reflector (6c), the first reflector (6c) being disposed closest to the outlet port (11) amongst the three reflectors (6a, 6b, 6c);
wherein the three reflectors (6a, 6b, 6c) comprise a second reflector (6a), the second reflector (6a) being disposed closest to the inlet port (14) amongst the three reflectors (6a, 6b, 6c);
wherein the flow restriction member (8) is interposed between the first reflector (6c) and the second reflector (6a);
wherein the flow channel (2) comprises a fourth wedge (16a) having a fourth sloped surface;
wherein the fourth wedge (16a) comprises at least one tooth (17a - 17b) protruding from the fourth sloped surface; and
wherein the fourth wedge (16a) is disposed between the second reflector (6a) and the inlet port (14).

2. The flow meter (1) according to claim 1,
wherein the flow restriction member (8) has a first side and has a second side, the second side being arranged opposite the first side;
wherein the first wedge (16b, 16c) is disposed on the first side of the flow restriction member (8);
wherein the flow restriction member (8) comprises a second wedge (16c, 16b) having a second sloped surface; and
wherein the second wedge (16c, 16b) comprises at least one tooth (17c - 17e) protruding from the second sloped surface.

3. The flow meter (1) according to claim 2,
wherein the second wedge (16c, 16b) comprises a second plurality of teeth (17c - 17e) protruding from the second sloped surface.

4. The flow meter (1) according to any of the claims 1 to 3,
wherein the flow restriction member (8) protrudes from the inner surface of the wall into the tubular member (9).

5. The flow meter (1) according to the claims 1 and 2,
wherein the first side of the flow restriction member (8) faces the inlet port (14); and
wherein the second side of the flow restriction member (8) faces the outlet port (11).

6. The flow meter (1) according to any of the claims 1 to 5, wherein the flow channel (2) comprises a third wedge (16d) having a third sloped surface;
wherein the third wedge (16d) comprises at least one tooth (17f - 17g) protruding from the third sloped surface; and
wherein the third wedge (16d) is disposed between the first reflector (6c) and the outlet port (11).

7. The flow meter (1) according to claim 6,
wherein the third wedge (16d) comprises a third plurality of teeth (17f - 17g) protruding from the third sloped surface.

8. The flow meter (1) according to claim 1,
wherein the fourth wedge (16a) comprises a fourth plurality of teeth (17a - 17b) protruding from the fourth sloped surface.

9. The flow meter (1) according to any of the claims 1 to 8,
wherein the three reflectors (6a, 6b, 6c) comprise a third reflector (6b), the third reflector (6b) being disposed centrally in between the outlet port (11) and the inlet port (14); and
wherein the flow restriction member (8) is arranged opposite the third reflector (6b).

10. The flow meter (1) according to any of the claims 1 to 9, wherein the first plurality of teeth (17c- 17e) comprises at least one cut tooth.

11. The flow meter (1) according to claim 10, wherein the first plurality of teeth (17c - 17e) is a first plurality of cut teeth (17c - 17e).

12. The flow meter (1) according to any of the claims 1 to 11,
wherein the tubular member (9) comprises a polymeric portion; and
wherein manufacture of the tubular member (9) involves injection moulding.

13. The flow meter (1) according to any of the claims 1 or 12,
wherein the housing (3) comprises a polymeric portion.

## Patentansprüche

1. Ein Durchflussmesser (1), umfassend:
ein Gehäuse (3) und einen im Inneren des Gehäuses (3) angeordneten Strömungskanal (2);
zwei Ultraschallwandler (4, 5), die entlang des Strömungskanals (2) und in einem Abstand zueinander angeordnet sind, wobei der erste Ultraschallwandler (4) so konfiguriert ist, dass er ein Ultraschallsignal in den Strömungskanal (2) aussendet, und der zweite Ultraschallwandler (5) so konfiguriert ist, dass er das vom ersten Ultraschallwandler (4) ausgesendete Ultraschallsignal empfängt;
drei Reflektoren (6a, 6b, 6c), die innerhalb des Strömungskanals (2) angeordnet sind, wobei die drei Reflektoren (6a, 6b, 6c) so konfiguriert sind, dass sie das vom ersten Ultraschallwandler (4) ausgesendete Ultraschallsignal auf seinem Weg zum zweiten Ultraschallwandler (5) mehrfach reflektieren, so dass ein W-förmiger Pfad (7) des Ultraschallsignals gebildet wird;
wobei der Strömungskanal (2) durch ein rohrförmiges Element (9) im Inneren des Gehäuses (3) gebildet wird;
wobei das rohrförmige Element (9) eine Wand mit einer Innenfläche aufweist, wobei die Reflektoren (6a, 6b, 6c) an der Innenfläche der Wand angeordnet sind;
wobei der Strömungskanal (2) ein Durchflussbegrenzungselement (8) umfasst,
wobei das Durchflussbegrenzungselement (8) zwischen zwei der drei Reflektoren (6a, 6b, 6c) angeordnet ist;
wobei das Durchflussbegrenzungselement (8) einen ersten Keil (16b, 16c) mit einer ersten schrägen Oberfläche umfasst;
wobei der erste Keil (16b, 16c) eine erste Vielzahl von Zähnen (17c - 17e) aufweist, die von der ersten schrägen Oberfläche vorstehen,
wobei der Strömungskanal (2) eine Auslassöffnung (11) aufweist;
wobei der Strömungskanal (2) eine Einlassöffnung (14) umfasst, wobei die Einlassöffnung (14) gegenüber der Auslassöffnung (11) angeordnet ist und sich ein Fluidpfad von der Einlassöffnung (14) zu der Auslassöffnung (11) erstreckt;
wobei die drei Reflektoren (6a, 6b, 6c) einen ersten Reflektor (6c) umfassen, wobei der erste Reflektor (6c) unter den drei Reflektoren (6a, 6b, 6c) am nächsten zur Auslassöffnung (11) angeordnet ist;
wobei die drei Reflektoren (6a, 6b, 6c) einen zweiten Reflektor (6a) umfassen, wobei der zweite Reflektor (6a) unter den drei Reflektoren (6a, 6b, 6c) am nächsten zur Einlassöffnung (14) angeordnet ist;
wobei das Durchflussbegrenzungselement (8) zwischen dem ersten Reflektor (6c) und dem zweiten Reflektor (6a) eingefügt ist;
wobei der Strömungskanal (2) einen vierten Keil (16a) mit einer vierten schrägen Fläche aufweist;
wobei der vierte Keil (16a) mindestens einen Zahn (17a - 17b) aufweist, der aus der vierten schrägen Fläche herausragt; und
wobei der vierte Keil (16a) zwischen dem zweiten Reflektor (6a) und der Einlassöffnung (14) angeordnet ist.

2. Der Durchflussmesser (1) nach Anspruch 1,
wobei das Durchflussbegrenzungselement (8) eine erste Seite und eine zweite Seite aufweist, wobei die zweite Seite gegenüber der ersten Seite angeordnet ist;
wobei der erste Keil (16b, 16c) auf der ersten Seite des Durchflussbegrenzungselements (8) angeordnet ist;
wobei das Durchflussbegrenzungselement (8) einen zweiten Keil (16c, 16b) mit einer zweiten schrägen Oberfläche umfasst; und
wobei der zweite Keil (16c, 16b) mindestens einen Zahn (17c - 17e) aufweist, der aus der zweiten schrägen Fläche herausragt.

3. Der Durchflussmesser (1) nach Anspruch 2,
wobei der zweite Keil (16c, 16b) eine zweite Vielzahl von Zähnen (17c - 17e) aufweist, die von der zweiten schrägen Oberfläche vorstehen.

4. Der Durchflussmesser (1) nach einem der Ansprüche 1 bis 3,
wobei das Durchflussbegrenzungselement (8) von der Innenfläche der Wand in das rohrförmige Element (9) hineinragt.

5. Der Durchflussmesser (1) nach den Ansprüchen 1 und 2,
wobei die erste Seite des Durchflussbegrenzungselements (8) der Einlassöffnung (14) zugewandt ist; und
wobei die zweite Seite des Durchflussbegrenzungselements (8) der Auslassöffnung (11) zugewandt ist.

6. Der Durchflussmesser (1) nach einem der Ansprüche 1 bis 5, wobei der Strömungskanal (2) einen dritten Keil (16d) mit einer dritten schrägen Oberfläche aufweist;
wobei der dritte Keil (16d) mindestens einen Zahn (17f - 17g) aufweist, der aus der dritten schrägen Fläche herausragt; und
wobei der dritte Keil (16d) zwischen dem ersten Reflektor (6c) und der Auslassöffnung (11) angeordnet ist.

7. Der Durchflussmesser (1) nach Anspruch 6,
wobei der dritte Keil (16d) eine dritte Vielzahl von Zähnen (17f - 17g) aufweist, die von der dritten schrägen Fläche vorstehen.

8. Der Durchflussmesser (1) nach Anspruch 1,
wobei der vierte Keil (16a) eine vierte Vielzahl von Zähnen (17a - 17b) aufweist, die von der vierten schrägen Fläche vorstehen.

9. Der Durchflussmesser (1) nach einem der Ansprüche 1 bis 8,
wobei die drei Reflektoren (6a, 6b, 6c) einen dritten Reflektor (6b) umfassen, wobei der dritte Reflektor (6b) mittig zwischen der Auslassöffnung (11) und der Einlassöffnung (14) angeordnet ist; und
wobei das Durchflussbegrenzungselement (8) gegenüber dem dritten Reflektor (6b) angeordnet ist.

10. Der Durchflussmesser (1) nach einem der Ansprüche 1 bis 9, wobei die erste Vielzahl von Zähnen (17c - 17e) mindestens einen geschnittenen Zahn umfasst.

11. Der Durchflussmesser (1) nach Anspruch 10, wobei die erste Vielzahl von Zähnen (17c - 17e) eine erste Vielzahl von geschnittenen Zähnen (17c - 17e) ist.

12. Der Durchflussmesser (1) nach einem der Ansprüche 1 bis 11,
wobei das rohrförmige Element (9) einen polymeren Teil umfasst; und
wobei die Herstellung des rohrförmigen Elements (9) Spritzgießen beinhaltet.

13. Der Durchflussmesser (1) nach einem der Ansprüche 1 oder 12,
wobei das Gehäuse (3) einen polymeren Teil umfasst.

## Revendications

1. Un débitmètre (1) comprenant :
un boîtier (3) et un canal d'écoulement (2) disposé à l'intérieur du boîtier (3) ;
deux transducteurs ultrasoniques (4, 5) disposés le long du canal d'écoulement (2) et à une distance l'un de l'autre, le premier transducteur ultrasonique (4) étant configuré pour émettre un signal ultrasonique dans le canal d'écoulement (2) et le second transducteur ultrasonique (5) étant configuré pour recevoir le signal ultrasonique émis par le premier transducteur ultrasonique (4) ;
trois réflecteurs (6a, 6b, 6c) disposés à l'intérieur du canal d'écoulement (2), les trois réflecteurs (6a, 6b, 6c) étant configurés pour réfléchir plusieurs fois le signal ultrasonique émis par le premier transducteur ultrasonique (4) sur son trajet vers le second transducteur ultrasonique (5) de manière à former un trajet en forme de W (7) du signal ultrasonique ;
dans lequel le canal d'écoulement (2) est formé par un élément tubulaire (9) à l'intérieur du boîtier (3) ;
dans lequel l'élément tubulaire (9) comprend une paroi ayant une surface intérieure, les réflecteurs (6a, 6b, 6c) étant disposés sur la surface intérieure de la paroi ;
dans lequel le canal d'écoulement (2) comprend un élément de restriction de l'écoulement (8),
l'élément de restriction de l'écoulement (8) est interposé entre deux des trois réflecteurs (6a, 6b, 6c) ;
dans lequel l'élément de restriction de l'écoulement (8) comprend un premier coin (16b, 16c) ayant une première surface inclinée ;
le premier coin (16b, 16c) comprend une première pluralité de dents (17c - 17e) faisant saillie sur la première surface inclinée,
dans lequel le canal d'écoulement (2) comprend un orifice de sortie (11) ;
dans lequel le canal d'écoulement (2) comprend un orifice d'entrée (14), l'orifice d'entrée (14) étant disposé à l'opposé de l'orifice de sortie (11) et un trajet de fluide s'étendant de l'orifice d'entrée (14) à l'orifice de sortie (11) ;
dans lequel les trois réflecteurs (6a, 6b, 6c) comprennent un premier réflecteur (6c), le premier réflecteur (6c) étant disposé le plus près de l'orifice de sortie (11) parmi les trois réflecteurs (6a, 6b, 6c) ;
dans lequel les trois réflecteurs (6a, 6b, 6c) comprennent un deuxième réflecteur (6a), le deuxième réflecteur (6a) étant disposé le plus près de l'orifice d'entrée (14) parmi les trois réflecteurs (6a, 6b, 6c) ;
dans lequel l'élément de restriction de l'écoulement (8) est interposé entre le premier réflecteur (6c) et le second réflecteur (6a) ;
dans lequel le canal d'écoulement (2) comprend un quatrième coin (16a) ayant une quatrième surface inclinée ;
dans lequel le quatrième coin (16a) comprend au moins une dent (17a - 17b) faisant saillie de la quatrième surface inclinée ; et
dans lequel le quatrième coin (16a) est disposée entre le second réflecteur (6a) et l'orifice d'entrée (14).

2. Débitmètre (1) selon la revendication 1,
dans lequel l'élément de restriction de l'écoulement (8) a un premier côté et un deuxième côté, le deuxième côté étant disposé à l'opposé du premier côté ;
dans lequel le premier coin (16b, 16c) est disposée sur le premier côté de l'élément de restriction de l'écoulement (8) ;
dans lequel l'élément de restriction de l'écoulement (8) comprend un deuxième coin (16c, 16b) ayant une deuxième surface inclinée ; et
dans lequel le deuxième coin (16c, 16b) comprend au moins une dent (17c - 17e) faisant saillie sur la deuxième surface inclinée.

3. Débitmètre (1) selon la revendication 2,
le deuxième coin (16c, 16b) comprend une deuxième pluralité de dents (17c - 17e) faisant saillie sur la deuxième surface inclinée.

4. Débitmètre (1) selon l'une des revendications 1 à 3,
dans lequel l'élément de restriction de l'écoulement (8) fait saillie de la surface intérieure de la paroi dans l'élément tubulaire (9).

5. Le débitmètre (1) selon les revendications 1 et 2,
dans lequel le premier côté de l'élément de restriction de l'écoulement (8) fait face à l'orifice d'entrée (14) ; et
dans lequel le deuxième côté de l'élément de restriction de l'écoulement (8) fait face à l'orifice de sortie (11).

6. Le débitmètre (1) selon l'une des revendications 1 à 5, dans lequel le canal d'écoulement (2) comprend un troisième coin (16d) ayant une troisième surface inclinée ;
dans lequel le troisième coin (16d) comprend au moins une dent (17f - 17g) faisant saillie de la troisième surface inclinée ; et
dans lequel le troisième coin (16d) est disposée entre le premier réflecteur (6c) et l'orifice de sortie (11).

7. Débitmètre (1) selon la revendication 6,
dans lequel le troisième coin (16d) comprend une troisième pluralité de dents (17f - 17g) faisant saillie sur la troisième surface inclinée.

8. Débitmètre (1) selon la revendication 1,
dans lequel le quatrième coin (16a) comprend une quatrième pluralité de dents (17a - 17b) faisant saillie sur la quatrième surface inclinée.

9. Débitmètre (1) selon l'une des revendications 1 à 8,
dans lequel les trois réflecteurs (6a, 6b, 6c) comprennent un troisième réflecteur (6b), le troisième réflecteur (6b) étant disposé au centre entre l'orifice de sortie (11) et l'orifice d'entrée (14) ; et
dans lequel l'élément de restriction de l'écoulement (8) est disposé à l'opposé du troisième réflecteur (6b).

10. Le débitmètre (1) selon l'une des revendications 1 à 9, dans lequel la première pluralité de dents (17c
- 17e) comprend au moins une dent coupée.

11. Le débitmètre (1) selon la revendication 10, dans lequel la première pluralité de dents (17c - 17e) est une première pluralité de dents coupées (17c - 17e).

12. Débitmètre (1) selon l'une des revendications 1 à 11,
dans lequel l'élément tubulaire (9) comprend une partie en polymère ; et
dans lequel la fabrication de l'élément tubulaire (9) implique un moulage par injection.

13. Débitmètre (1) selon l'une des revendications 1 ou 12,
dans lequel le boîtier (3) comprend une partie en polymère.
